# EUROPEAN PATENT APPLICATION

(11) **EP 2 088 042 A1**
(43) Date of publication of application: **12.08.2009**
(21) Application number: 09001625.4
(22) Date of filing: 05.02.2009
(51) Int. Cl.: B60T 7/22, B60W 30/18

(54) **Brake controller, brake system provided with the same, and vehicle provided with the same brake system**

(30) Priority: 05.02.2008 JP 2008025357
(71) Applicant: Hitachi Ltd., Chiyoda-ku Tokyo 100-8280 (JP)
(72) Inventor: Nasu, Shingo, Tokyo 100-8220 (JP); Miyajima, Ayumu, Tokyo 100-8220 (JP); Innami, Toshiyuki, Tokyo 100-8220 (JP); Nishino, Kimio, Tokyo 100-8220 (JP)
(74) Representative: MERH-IP Matias Erny Reichl Hoffmann

(57) **Abstract**

A brake controller (100) for controlling a plurality of actuators (200, 300) for driving braking members of a plurality of brakes is disclosed, where the controller includes a performance setting unit (112) for setting desired performance required of the brakes; a braking force calculating unit (112) for calculating a desired braking force to be produced by each brake; a drive ratio calculating unit (114) for calculating drive ratios at which the actuators (200, 300) operate to achieve the desired performance and to make the plurality of brakes produce a braking force equal to or nearly equal to the desired braking force; and a drive signal output unit for providing the actuators drive signals corresponding to the drive ratios for the actuators (200, 300).

## Description

### BACKGROUND OF THE INVENTION

The present invention relates to a brake controller for controlling actuators for operating a movable member included in brakes, a brake system provided with the same brake controller, and a vehicle provided with the same brake system.

Brake systems disclosed in, for example, Japanese Patent Nos. 2646860 and 2646861 are equipped with an antilock-braking system (ABS) for preventing wheel lockup.

Such a known brake system is equipped, for example, with hydraulic actuators for driving brakes, a pressure-releasing actuator for releasing the hydraulic pressure to each brake, and a controller for controlling those actuators. When a wheel is locked or when a wheel is about to be locked up, the controller gives a control signal specifying a braking force corresponding to a position of the brake pedal to the actuator for driving the brake, and gives a control signal specifying a braking force that will not lock up the wheel to the actuator fore releasing hydraulic pressure.

The known brake systems are excellent in ensuring the stability of a vehicle according to the conditions of the environment of the vehicle.

However, users demand further improvement of the response characteristics and durability of the brake system.

### SUMMARY OF THE INVENTION

The present invention has been made to meet a user's demands and it is therefore an object of the present invention to provide a brake control technique capable of improving the response characteristics and durability of a brake system.

The present invention uses a plurality of actuators for driving the braking members of a plurality of brakes, and a brake controller for controlling those actuators.

The brake controller includes a performance setting unit for setting desired performance characteristics required of the brakes; a braking force calculating unit for calculating a desired braking force to be produced by each brake; a drive ratio calculating unit for calculating drive ratios at which the actuators operate to achieve the desired performance and to make the plurality of brakes produce a braking force equal to or nearly equal to the desired braking force; and a drive signal output unit for providing the actuators drive signals corresponding to the drive ratios for the actuators.

According to the present invention, the respective drive ratios of the actuators, are calculated according to desired performance characteristics, such as response characteristics and durability, and hence performance corresponding to desired performance characteristics can be achieved.

### BRIEF DESCRIPTION OF THE DRAWINGS

The above and other objects, features and advantages of the present invention will become more apparent from the following description taken in connection with the accompanying drawings, in which:
Fig. 1 is a schematic plan view of a vehicle in a first embodiment;
Fig. 2 is a block diagram of a brake controller included in the vehicle in the first embodiment;
Fig. 3 is a longitudinal sectional view of a first actuator, namely, a master-pressure generator, and a second actuator, namely, a wheel-braking-pressure generator included in the vehicle in the first embodiment;
Fig. 4 is a flow chart describing the operation of a brake controller included in the vehicle in the first embodiment;
Fig. 5 is a graph illustrating the braking characteristics of each of the actuators at a maximum drive ratio included in the vehicle in the first embodiment;
Figs. 6A and 6B are graphs illustrating the drive ratio of each actuator, and the variation of braking force, respectively, when a desired response characteristic is specified, in the first embodiment;
Figs. 7A and 7B are graphs illustrating the drive ratio of each actuator, and the variation of braking force, respectively, when durability is specified as desired performance, in the first embodiment;
Fig. 8 is a graph illustrating the variation of the drive ratios of actuators with distance from an obstacle in an automatic cruising mode, in the first embodiment;
Fig. 9 is a schematic plan view of a vehicle in a second embodiment;
Fig. 10 is a block diagram of a brake controller and actuators included in the second embodiment;
Fig. 11 is a graph illustrating the respective braking characteristics of actuators included in the second embodiment when a response characteristic is specified as a desired performance characteristic;
Fig. 12 is a graph illustrating the respective braking characteristics of actuators included in the second embodiment when a durability is specified as a desired performance characteristic; and
Fig. 13 is a schematic plan view illustrating modifications of the first and the second embodiments.

### DESCRIPTION OF THE PREFERRED EMBODIMENTS

Vehicles in the preferred embodiments are described with reference to the accompanying drawings.

### First Embodiment

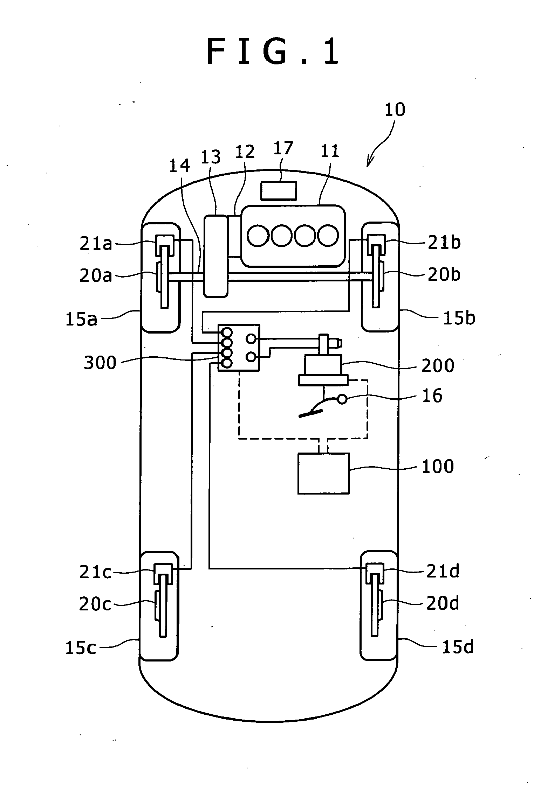

A vehicle 10 in a first embodiment is described with reference to Figs. 1 to 8.

The vehicle 10 in the first embodiment is a front-engine front-drive vehicle (FF vehicle). The present invention is not limited to the FF vehicle in its practical application and is applicable to four-wheel-drive vehicles (4WD vehicles) and front-engine rear-drive vehicles (FR vehicles).

Referring to Fig. 1, the vehicle 10 is equipped with an engine 11, a torque converter 12, a transmission 13, drive shafts 14, wheels 15a, 15b, 15c and 15d, a brake pedal 16, disk rotors 20a, 20b, 20c and 20d, brake calipers 21a, 21b, 21c and 21d, a brake controller 100, a master-pressure generator 200, namely a first actuator, capable of generating hydraulic pressure for operating the brake calipers 21a to 21d, a wheel-braking-pressure generator 300, namely, a second actuator, capable of generating hydraulic pressure for operating the brake calipers 21a to 21d, and a battery 17.

The engine 11 is an internal-combustion engine in which combustion of an air-fuel mixture takes place in combustion chambers to generate power. The combustion gasses drive the pistons. The motions of the pistons are transmitted by connecting rods to a crankshaft to rotate the crankshaft. The output power of the crankshaft is transmitted through the torque converter 12, the transmission 13 and the drive shafts 14 to the front wheels 15a and 15b.

The torque converter 12 is interposed between the engine 11 and the transmission 13. The torque converter 12 functions as clutch to transmit the output torque of the engine 11 intermittently to the transmission 13 by using a working fluid such as oil, multiplies the output torque of the engine 11, and transmits a multiplied torque to the transmission 13.

The transmission 13 is interposed between the torque converter 12 and the drive shafts 14. The transmission 13 is provided with multiple gears, for example, for five forward speeds and reverse.

The transmission 13 is interlocked with the front wheels 15a and 15b by the drive shafts 14. The rotational driving force of the engine 11 is transmitted through the drive shafts 14 to the front wheels 15a and 15b.

The driver of the vehicle 10 operates the brake pedal 16 to decelerate the vehicle 10. Pressure applied by the driver to the brake pedal 16 is transmitted to the master-pressure generator 200 as a first actuator. Hydraulic pressure generated by the master-pressure generator 200 is transmitted through the wheel-braking-pressure generator 300 as a second actuator, to the brake calipers 21a to 21d to operate the brake calipers 21a to 21d. The wheel-braking-pressure generator 300 transmits the hydraulic pressure generated by the master-pressure generator 200 directly to the calipers 21a to 21d or transmits a multiplied hydraulic pressure produced by multiplying the hydraulic pressure generated by the master-pressure generator 200 to the calipers 21a to 21d.

The brakes include disk rotors 20a to 20d and brake calipers 21a to 21d, respectively. The disk rotors 20a to 20d are fixed to the wheels 15a to 15d, respectively. Thus, the disk rotors 20a to 20d rotate together with the wheels 15a to 15d, respectively. Each of the calipers 21a to 21d includes a cylinder, a piston, and brake pads, which are not shown. The pistons fitted in the brake cylinders are moved by the hydraulic fluid supplied by the wheel-braking-pressure generator 300 to press the brake disks respectively against the disk rotors 20a to 20d to generate frictional force between the disk rotors 20a to 20d and the corresponding brake pads. This frictional force acts as a braking force.

In the first embodiment, a brake system includes the brake pedal 16, the disk rotors 20a to 20d, the brake calipers 21a to 21d, the master pressure-generator 200, the wheel-braking pressure-generator 300, the brake controller 100 and sensors, which are described below.

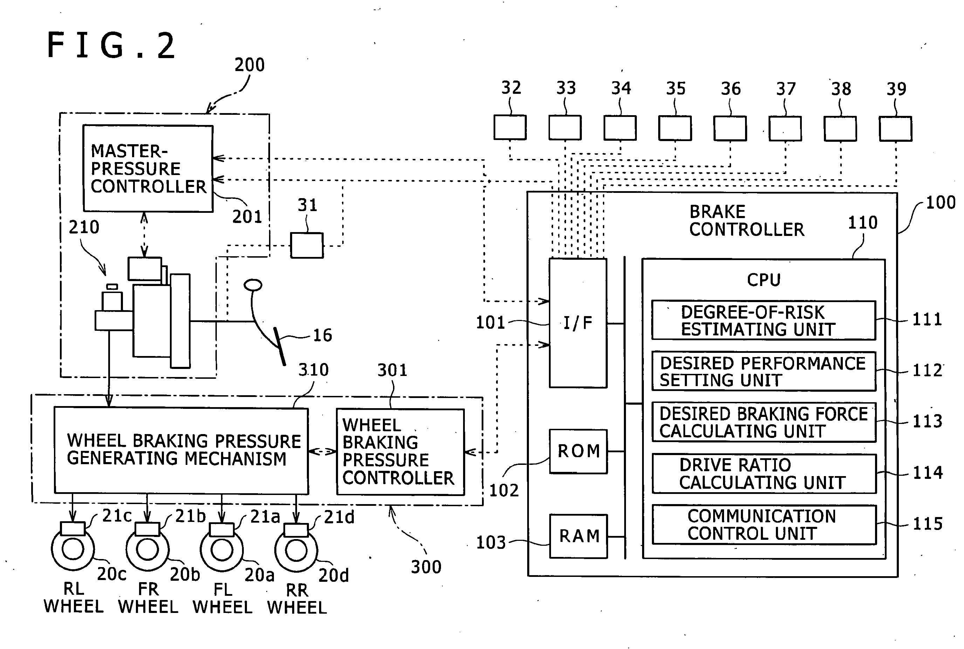

Referring to Fig. 2, the brake controller 100 has a CPU 110 that performs arithmetic and logic operations, an interface (I/F) 101 through which signals are sent to and received from external devices, a ROM 102 storing programs to be carried out by and data needed by the CPU 110, and a RAM 103 providing working memory for the CPU 110.

The CPU 110 has functional components including a degree-of-risk estimating unit 111 that estimates the degree of risk that may possibly be encountered by the vehicle 10, a performance setting unit 112 that sets desired performance on the basis of the degree of risk estimated by the degree-of-risk estimating unit 111 and information provided by sensors, a braking force calculating unit 113 that calculates a desired braking force on the basis of the degree of risk estimated by the degree-of-risk estimating unit 111 and information provided by sensors, a drive ratio calculating unit 114 that calculates drive ratios at which the master-pressure generator 200 and the wheel-braking-pressure generator 300 operate according to the desired braking force and the desired performance characteristics, and a communication control unit 115 that controls communication with external devices. Components 111 to 115 operate when the CPU 110 executes programs stored in the ROM 102.

The sensors include a desired braking force sensor 31, a steering angle sensor 32 for measuring the steering angle of the front wheels 15a and 15b, an accelerator pedal stroke sensor 33 for measuring the position of the accelerator pedal, a running speed sensor 34 for measuring the running speed of the vehicle 10, a yaw-rate sensor 35 for measuring the actual yaw rate of the vehicle 10, a longitudinal acceleration sensor 36 for measuring the longitudinal acceleration of the vehicle 10, a transverse acceleration sensor 37 for measuring the transverse acceleration of the vehicle 10, wheel speed sensors 38 respectively for measuring the speeds of the wheels 15a to 15d, and an environmental condition sensor 39 for measuring the positions of obstacles around the vehicle 10, road conditions and distances from the vehicle 10 to white lines and yellow lines. Those sensors are connected to the interface 101 of the brake controller 100.

The desired braking force sensor 31 measures a braking force desired by the driver. The desired braking force sensor 31 is a stroke sensor for measuring the position of an input rod connected to the brake pedal 16. The desired braking force sensor 31 may be a combination of multiple stroke sensors. Therefore, even if a signal provided by one of the plurality of stroke sensors stops, a desired braking force desired by the driver can be recognized from signals provided by the rest of the stroke sensors to ensure a fail-safe operation. The desired braking force sensor 31 may be a pressure sensor capable of measuring a pressure applied to the brake pedal 16 or may be a combination of a pressure sensor and a stroke sensor.

The environmental condition sensor 39 includes one or more cameras for photographing the environment surrounding the vehicle 10, and an image processing device for processing images provided by the one or more cameras for image analysis.

The master-pressure generator 200 includes a master-pressure controller 201 that receives a control signal from the brake controller 100, and a master-pressure generating mechanism 210 controlled by the master-pressure controller 201.

The wheel-braking-pressure generator 300 includes a wheel-braking-pressure controller 301 that receives a control signal from the brake controller 100, and a wheel-braking-pressure generating mechanism 310 controlled by the wheel-braking-pressure controller 301.

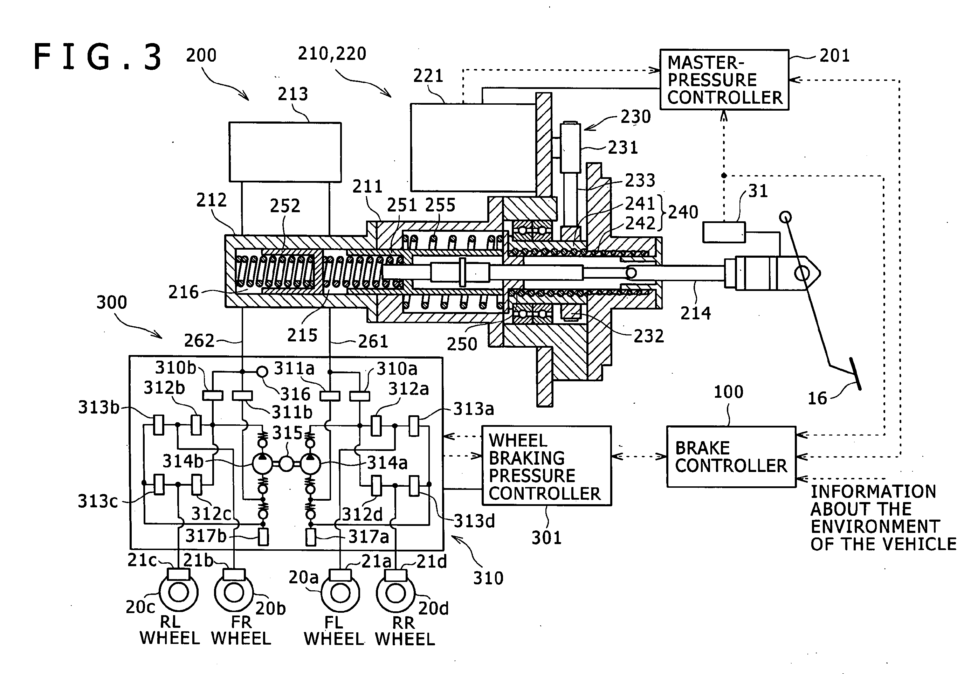

Referring to Fig. 3, the master-pressure generating mechanism 210 is provided with a return spring holding cylinder 211, a master cylinder 212 filled with a hydraulic fluid, a reservoir tank 213 storing the working fluid to be supplied into the master cylinder 212, an input rod 214, namely, a first pressing unit, having one end connected to the brake pedal 16 and the other end inserted into the master cylinder 212, a motor-driven pressing mechanism 220, namely, a second pressing unit.

The interior of the reservoir tank 213 is divided into two chambers by a partition wall, not shown. The chambers are connected respectively to chambers 215 and 216 formed in the master cylinder 212.

The motor-driven pressing mechanism 220 has a pressing motor 221 driven by a drive signal provided by the master-pressure controller 201, a reduction mechanism 230 for multiplying the output torque of the pressing motor 221, a rotation-to-linear-motion conversion mechanism 240 for converting rotation to linear motion, a moving member 250 driven for linear movement by the rotation-to-linear-motion conversion mechanism 240, a primary piston 251 engaged with the moving member 250 and defining a primary chamber 215 in the master cylinder 212, a secondary piston 252 defining a secondary chamber 216 in the master cylinder 212, and a return spring 255 held in the return spring holding cylinder 211 to return the moving member 250 displaced from the home position by the rotation-to-linear-motion conversion mechanism 240 to the home position.

The reduction mechanism 230 multiplies the output torque of the pressing motor 221 by its reduction ratio. The reduction mechanism 230 may be a gear-type reduction mechanism or a pulley-type reduction mechanism. In the first embodiment, the reduction mechanism 230 is a pulley type reduction mechanism including a drive pulley 231 mounted on the output shaft of the pressing motor 221, a drive pulley 232 and a belt 233 extended between the pulleys 231 and 232. If the output torque of the pressing motor 221 is sufficiently high and does not need to be multiplied, the reduction mechanism 230 may be omitted and the pressing motor 221 may be directly connected to the rotation-to-linear-motion conversion mechanism 240. When the reduction mechanism 230 is omitted, problems in reliability, noise and assembly attributable to the reduction mechanism 230 can be avoided.

The rotation-to-linear-motion conversion mechanism 240 converts the rotational power of the pressing motor 221 into translational power for pushing the primary piston 251 through the moving member 250. A rack-and-pinion mechanism and a ball screw are suitable rotation-to-linear-motion conversion mechanisms. The first embodiment employs a ball screw including a threaded nut 241 rotated by the driven pulley 232, and a threaded rod 242 linked to the threaded nut 232 by balls. The threaded rod 242 moves axially when the threaded nut 241 rotates.

As mentioned above, the input rod 241 has one end connected to the brake pedal 16 and the other end inserted into the primary chamber 215 of the master cylinder 212. When the brake pedal 16 is depressed to move the input rod 214 linearly, the pressure of the hydraulic fluid in the primary chamber 215 increases, the secondary piston 252 is pushed and the pressure of the hydraulic fluid in the secondary chamber 216 increases. Consequently, the hydraulic fluid flows into a first master line 261 connecting the primary chamber 215 to the wheel-braking-pressure generating mechanism 310, and to a second master line 262 connecting the secondary chamber 216 to the wheel-braking-pressure generating mechanism 310. Then, the hydraulic fluid is distributed by the wheel-braking-pressure generator 300 to the brake calipers 21a to 21d. Thus, a predetermined braking force is available even if the motor-driven pressing mechanism 220 malfunctions. As mentioned above, the pressure of the hydraulic fluid in the primary chamber 215 increases when the brake pedal 16 is depressed and the pressure of the hydraulic fluid in the primary chamber 215 acts as a reaction force on the brake pedal 16. Therefore, any mechanism for generating a reaction force that acts on the brake pedal 16 is not necessary. Thus, the brake system can be formed in a small, lightweight form.

As mentioned above, the pressing motor 221 is driven by a drive signal given thereto by the master-pressure controller 201 to generate a desired torque. The pressing motor 221 may be a dc motor, a dc brushless motor or an ac motor. From the viewpoint of controllability, noise and durability, a dc brushless motor is preferable. The pressing motor 221 is provided with a position indicator. The position indicator gives a position signal to the master-pressure controller 201. The master-pressure controller 201 calculates the angular position of the output shaft of the pressing motor 221 on the basis of the position signal received from the position indicator and can calculate a linear distance that the moving member 250 is moved by the rotation-to-linear-motion conversion mechanism 240, namely, the displacement of the primary piston 251.

The output torque of the pressing motor 221 is multiplied by the reduction mechanism 230, and the multiplied torque rotates the threaded nut 241 of the rotation-to-linear-motion conversion mechanism 240. Thus, the rotated threaded nut 241 moves the threaded rod 242 longitudinally. Consequently, the moving member 250 pushes the primary piston 251.

The return spring 255 has one end in contact with one end of the moving member 250 opposite the other end on the side of the threaded rod 242, and the other end in contact with the end wall of the spring holding cylinder 211. The return spring 255 exerts a force through the moving member 250 on the threaded rod 242 in a direction opposite a direction in which the thrust of the threaded rod 242 acts. Even if the pressing motor 221 malfunctions in a state where the pressing motor 221 is driven, the primary piston 251 is pushed and the pressure of the working fluid in the master cylinder 212 is increased, and a control operation for returning the threaded rod 242 cannot be performed, the threaded rod 242 can be returned to its home position by the resilience of the return spring 255 to reduce the pressure in the master cylinder 212 to a pressure nearly equal to zero. Thus, it is possible to avoid the exertion of drag on the vehicle 10 resulting from the malfunction of the pressing motor 211.

The pressure of the hydraulic fluid in the primary chamber 215 increases when the primary piston 251 is pushed, the secondary piston 252 is pressed by the increased pressure of the hydraulic fluid, and the pressure of the hydraulic fluid in the secondary chamber 216 increases. Consequently, the hydraulic fluid flows through the first master line 261 connecting the primary chamber 215 to the wheel-braking -pressure generating mechanism 310, and the second master line 262 connecting the secondary chamber 216 to the wheel-braking-pressure generating mechanism 310. Thus the hydraulic fluid is distributed through the wheel-braking-pressure generator 300 to the brake calipers 21a to 21d. That is, the hydraulic fluid is distributed through the master lines 261, 262 and the wheel-braking-pressure generator 300 to the brake calipers 21a to 21d in one of a case where the input rod 214 is moved by a force exerted by the driver and a case where the pressing motor 221 is driven to push the primary piston 251.

The master brake cylinder assembly of the master-pressure generating mechanism 210 of the first embodiment is a tandem brake master cylinder including the primary piston 251 and the secondary piston 252. The tandem brake master cylinder can ensure a certain magnitude of master braking pressure even if the master cylinder 212 leaks. For example, if the hydraulic fluid leaks from the primary chamber 215 defined by the primary piston 251 and the master cylinder 211, the primary piston 251 pushes the secondary piston 252 directly, so that the pressure of the hydraulic fluid in the secondary chamber 216 can be increased.

In the first embodiment, the primary piston 251 can be displaced according to the displacement of the input rod 214 caused by the driver's braking action to increase the pressure of the hydraulic fluid in the primary chamber 215 by the input rod 214. The ratio at which the pressure of the hydraulic fluid in the primary chamber 215 is increased (hereinafter, referred to as "pressure increasing ratio") is dependent on the ratio between the respective displacements of the input rod 214 and the primary piston 251 or the ratio between the respective cross-sectional areas of the input rod 214 and the primary piston 251(AIR and APP, respectively). When the displacement of the primary piston 251 is equal to that of the input rod 214, the pressure increasing ratio is uniquely equal to (AIR + APP)/(AIR). The AIR and the APP are calculated according to a desired pressure increasing ratio, and the pressure increasing ratio can be fixed by controlling the movement of the primary piston 251 such that the displacement of the primary piston 251 is equal to that of the input rod 214. As mentioned above, the displacement of the input rod 214 is measured by the desired braking force sensor 31. The displacement of the primary piston 251 is calculated by the master-pressure controller 201 on the basis of a signal provided by the pressing motor 221.

The wheel-braking-pressure generating mechanism 310 is provided with gate OUT valves 310a and 310b for controlling the flow of the hydraulic fluid coming from the master-pressure generating mechanism 210 into the brake calipers 21a to 21d, gate IN valves 311a and 311b for controlling the flow of the hydraulic fluid coming from the master-pressure generating mechanism 210 into a pump, which is described below, IN valves 312a, 312b, 312c and 312d for controlling the flow of the hydraulic fluid passed through the gate OUT valves 310a and 310b and the hydraulic fluid coming from the pump into the brake calipers 21a to 21d, OUT valves 313a, 313b, 313c and 313d for reducing the pressure of the hydraulic fluid acting on the brake calipers 11a to 11d, pumps 314a and 314b for increasing the pressure of the hydraulic fluid received through the gate IN valves 311a and 311b from the master-pressure generating mechanism 210, a motor 315 for driving the pumps 314a and 314b, a master-pressure sensor 316 for measuring master pressure, and reservoir tanks 317a and 317b.

The wheel-braking-pressure generating mechanism 310 may be a hydraulic control unit for controlling an antilock-braking system, a hydraulic control unit for vehicle behavior stabilizing control or a hydraulic control unit for brake-by-wire control.

The wheel-braking-pressure generating mechanism 310 has a first brake system for controlling the flow of the hydraulic fluid into the brake caliper 21a for the front left wheel and the brake caliper 21d of the rear right wheel, and a second brake system for controlling the flow of the hydraulic fluid into the brake caliper 20b for the front right wheel and the brake caliper 20c for the rear left wheel. The first brake system includes the gate OUT valve 310a, the gate IN valve 311a, IN valves 312a and 312d, OUT valves 313a and 313d, and the reservoir tank 317a. The second brake system includes the gate OUT valve 310b, gate IN valve 311b, IN valves 312b and 312c, OUT valves 313b and 313c, and reservoir tank 317b. A master line 261 has one end connected to the primary chamber 215 of the master-pressure generator 210 and the other end connected to the gate OUT valve 310a and the gate IN valve 311a of the first brake system. A second master line 262 has one end connected to the gate OUT valve 310b and the gate IN valve 311b of the second brake system and the other end connected to the secondary chamber 216 of the master-pressure generator 210.

Since the vehicle 10 is provided with the two brake systems, stable behavior of the vehicle 10 can be ensured even if one of the two brake system fails by applying braking force to the two diagonally opposite wheels by the other brake system.

All the gate OUT valves 310a and 310b, the gate IN valves 311a and 311b, the IN valves 312a to 312d, and the OUT valves 313a to 313d are electromagnetic valves, respectively provided with solenoids that open and close those valves. Those valves are controlled by the wheel-braking-pressure controller 301. In the first embodiment, the gate OUT valves 310a and 310b and the IN valves 312a to 312d open when no current is supplied thereto and closes when current is supplied thereto, and the gate IN valves 311a and 311b and the OUT valves 313a 5 to 313d close when no current is supplied thereto and open when current is supplied thereto.

Plunger pumps, trochoid pumps and gear pumps are suitable for use as the pumps 314a and 314b. Gear pumps are desirable with respect to noise level. The motor 315 for driving the pumps 314a and 314b is actuated on the basis of a drive signal given to the wheel braking pressure controller 301 to drive the pumps 314a and 314b. A dc motor, a dc brushless motor and an ac motor are suitable for use as the motor 315. A dc brushless motor is desirable with respect to controllability, noise and durability.

The master-pressure sensor 316 is connected to the second master line 262 connected to the secondary chamber 216 of the master-pressure generating mechanism 210. A signal representing a master pressure measured by the master-pressure sensor 316 is sent to the wheel braking pressure controller 301. The number and the positions of master-pressure sensors 316 may be properly determined from the fail-safe point of view.

The operation of the wheel-braking-pressure generating mechanism 310 is described below. The first and the second brake system are the same in function and operation and hence only the first brake system is described.

The operation for sending the hydraulic fluid having pressure increased by the master-pressure generating mechanism 210 to the brake caliper 21a of the front left wheel and the brake caliper 21d of the rear right wheel without further increasing the pressure thereof is described below.

In this case, the gate IN valve 311a and the OUT valves 313a and 313c are closed, and the gate OUT valve 310a and the IN valves 312a and 312d are open.

The hydraulic fluid supplied through the first master line 261 from the master-pressure generating mechanism 210 is sent through the gate OUT valve 310a and the IN valves 312a and 312d to the brake calipers 21a and 21d. As mentioned above, the working fluid supplied by the master-pressure generating mechanism 210 is sent to the brake calipers 21a and 21d without the pressure thereof being increased by the pump 314a.

As mentioned above, the gate OUT valves 310a and 310b and the IN valves 312a to 312d are opened when no current is supplied thereto, and the gate IN valves 311a and 311b and the OUT valves 313a to 313d are closed when no current is supplied thereto in the first embodiment. The condition of those valves in a state where no current is supplied to the valves is the same as that of the valves when the hydraulic fluid delivered from the master-pressure generating mechanism 210 is supplied to the brake calipers 21a and 21d without the pressure thereof being increased by the pump 314a. Therefore, even if power cannot be supplied to those valves due to the breakdown of the power supply system of the vehicle 10, the master-pressure generating mechanism 210 can control the pressure of the hydraulic fluid to be sent to the brake calipers 21a and 21d.

The operation for sending the hydraulic fluid of a pressure increased by the master-pressure generating mechanism 210 to the brake calipers 21a and 21d respectively of the front left wheel and the rear right wheel after increasing the pressure still further by the pump 314a is described below.

In this case, the gate IN valve 311a and the IN valves 312a and 312d are open and the gate OUT valve 310a and the OUT valves 313a and 313d are closed.

The hydraulic fluid delivered from the master-pressure generating mechanism 210 and flowed through the first master line 261 flows through the gate IN valve 311a into the pump 314a, and pressure of the hydraulic fluid is increased. The hydraulic fluid of an increased pressure is delivered from the pump 314a into the brake calipers 21a and 21d through the IN valves 312a and 312d. The hydraulic fluid can be supplied from the pump 314a to the brake calipers 21a and 21d even if the master-pressure generating mechanism 210 malfunctions and cannot deliver the working fluid. In such a case, the gate IN valve 311a and the gate OUT valve 310a are closed.

In the first embodiment, even if one of the master-pressure generator 200 and the wheel-braking-pressure generator 300 becomes defective, the other can operate.

The operation for reducing the pressure of the hydraulic fluid acting on the brake calipers 21a and 21d is described below.

In this case, the OUT valves 313a and 313d are open and the rest of the valves are opened or closed depending on conditions. Basically, the IN valves 312a and 312d are closed.

The working fluid supplied to the calipers 21a and 21d returns through the OUT valves 313a and 313d to the reservoir tank 317a.

The hydraulic fluid contained in the reservoir tank 317a is used by the pump 314a to increase the pressure of the hydraulic fluid delivered from the master-pressure generating mechanism 210.

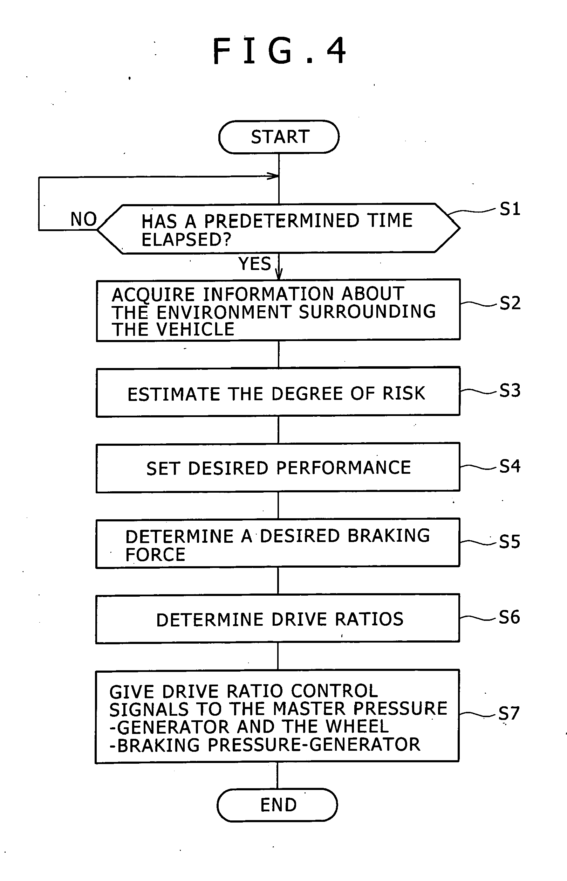

The operation of the brake controller 100 is described below with reference to a flow chart shown in Fig. 4.

In steps S1 and S2, the communication control unit 115a of the brake controller 100 periodically receives information about the environment surrounding the vehicle 10 from the sensors at predetermined intervals and stores the received information in the RAM 103. The predetermined intervals are on the order of milliseconds. The sensors include the braking force sensor 31, the steering angle sensor 32, the accelerator pedal stroke sensor 33, the running speed sensor 34, the yaw rate sensor 35, the longitudinal acceleration sensor 36, the transverse acceleration sensor 37, the wheel speed sensors 38, and the environmental condition sensor 39. The communication control unit 115a also receives information from the master-pressure controller 201 and the wheel-braking-pressure controller 301. Basically, those sensors 31 to 39 provide output signals continuously while the ignition switch is closed. The communication control unit 115 samples the output signals of the sensors 31 to 39 at predetermined intervals. The master-pressure controller 201 and the wheel-braking-pressure controller 301 provide signals indicating whether or not the master-pressure controller 201 and the wheel-braking-pressure controller 301 are defective and send the same signals to the communication control unit 115. Pieces of the information about the environment surrounding the vehicle 10 provided by the sensors 31 to 39 and sampled by a predetermined number of sampling cycles are stored in the RAM 103 to recognize changes in the environment surrounding the vehicle 10.

In step S3, the degree-of-risk estimating unit 111 estimates the degree of risk on the basis of information about various conditions of the environment surrounding the vehicle 10 obtained in step S2. The degree of risk increases when an operation that may greatly disturb the behavior of the vehicle 10, such as a sharp steering operation or a sharp accelerating operation, is performed, when the vehicle runs in a running mode in which it is highly possible that the vehicle 10 deviates from the lane or spins, such as a running mode in which the running speed is excessively high, the yaw rate is excessively high or the lateral acceleration is excessively high, when the frictional property of the road is low, or when an object is at an excessively short distance from the vehicle 10.

The degree of risk can be estimated, for example, by multiplying values measured by the sensors 31 to 39 and changes in the measured values by predetermined weighting values, and calculating the sum of those weighted values. The degree of risk is very high when the environmental condition sensor 39 provides a detection signal indicating that the preceding vehicle is at an excessively short distance from the vehicle 10, the vehicle 10 is running at a running speed higher than that of the preceding vehicle and the running speed difference is large, the running speed sensor 38 provides a detection signal indicating that the vehicle 10 is running at a high running speed, and the steering angle sensor 32 provides a detection signal indicating that steering angle is large or steering angle increased sharply. The degree of risk is low when the distance between the preceding vehicle and the vehicle 10 is long, and the running speed difference between the preceding vehicle and the vehicle 10 is small and the vehicle 10 is traveling faster than the preceding vehicle or the running speed difference between the preceding vehicle and the vehicle 10 is large and the vehicle 10 is running slower than the preceding vehicle, and the steering angle sensor 32 provides a detection signal indicating that the steering angle is small.

The degree-of-risk estimating unit 111 estimates the type of risk in addition to the degree of risk. For example, the degree-of-risk estimating unit 111 estimates a risk of colliding with an object, a risk of deviating from the lane and a risk of spinning.

In step S4, a desired performance setting unit 112 sets desired performance on the basis of information about the environment obtained in step S2 and the degree of risk estimated in step S3.

An improvement in the response characteristic of the brake system is set if the degree of risk is not lower than a predetermined first threshold, or an improvement in the durability of the brake system is set if the degree of risk is lower than the first threshold. In some cases, an improvement in the response characteristic is set when the driver has selected a sport driving mode or the driver can perform quick operations even if the degree of risk is lower than the first threshold.

In step S5, the desired braking force calculating unit 113 calculates a desired time-varying braking characteristic indicating the variation of desired braking force with time on the basis of the information about the environment of the vehicle 10 obtained in step S2 and the degree of risk estimated in step S3.

When the degree of risk is not lower than the first threshold, the desired time-varying braking characteristic indicates desired braking force that increases sharply with time. The magnitude of the desired braking force is dependent on the category of risk. For example, if the risk is a possibility of collision with an object, the magnitude of the desired braking force is a maximum braking force that can be produced by the brake system. If the risk is a possibility of spinning due to a low frictional property of the road, the magnitude of the desired braking force is comparatively small. If the degree of risk is higher than a second threshold, which is higher than the first threshold, the desired time-varying braking characteristic indicates desired braking force sharply varying with time to a maximum braking force that can be produced by the brake system and the magnitude of the desired braking force is a maximum braking force that can be exerted by the brake system regardless of the category of the risk.

The desired braking force is a braking force corresponding to information about the braking operation of the user represented by the output of the braking force sensor 31 if the degree of risk is below the first threshold. For example, when the brakes need to be applied to maintain a distance between an object and the vehicle 10 not less than a predetermined distance in an automatic cruising mode, in which the user's foot is on neither the accelerator pedal nor the brake pedal 16, even though the degree of risk is low, a desired time-varying braking characteristic is calculated according to the distance between the object and the vehicle 10, the running speed of the vehicle 10 and the steering angle. More specifically, the distance between the object and the vehicle 10, the running speed of the vehicle 10 and the steering angle are multiplied by weighting values, and the sum of the weighted values is calculated to determine a desired braking force. The desired braking force is lower when the distance between the object and the vehicle is longer, is comparatively high when the running speed is high, and is comparatively high when the steering angle is comparatively large.

If the difference between the degree of risk estimated in step S3 in the present control cycle and the degree of risk estimated in step S3 in the next control cycle in one braking opportunity is below a predetermined threshold, a desired braking characteristic is not calculated in step S5 in the next control cycle, and the desired braking characteristic calculated in step S5 in the present control cycle is used.

In step S6, the drive ratio calculating unit 114 calculates drive ratio characteristics in which time-varying drive ratios at which the master pressure-generator 200 and the wheel-braking-pressure generator 300 operate changes with time, respectively, and calculates the present drive ratios at which the master-pressure generator 200 and the wheel-braking-pressure generator 300 operate at the present. In step S7, the communication control unit 115 gives drive ratio control signals corresponding to the present drive ratios to the master-pressure generator 200 and the wheel-braking-pressure generator 300. The drive ratio are the ratio of an actual drive value to the maximum drive value of an actuator, such as the master-pressure generator 200, the wheel-braking-pressure generator 300, and so on.

The drive ratio calculating unit 114 calculates the drive ratio characteristics of the master-pressure generator 200 and the wheel-braking-pressure generator 300 on the basis of the desired performance set in step S4 and the desired braking characteristic calculated in step S5, and then calculates the present drive ratios of the master-pressure generator 200 and the wheel-braking-pressure generator 300. When a new desired braking characteristic cannot be calculated in step S5 of the present control cycle because the difference between the degree of risk estimated in the preceding control cycle and that estimated in the present control cycle is below a predetermined value, new drive ratio characteristics cannot be calculated in step S6 of the present control cycle and the drive ratio characteristics calculated in step S6 of the preceding control cycle are used. The drive ratios of the master-pressure generator 200 and the wheel-braking-pressure generator 300 at the present are calculated on the basis of the drive ratio characteristics calculated in step S6 of the preceding control cycle.

The performance of the master-pressure generator 200 as the first actuator, and the wheel-braking-pressure generator 300 as the second actuator are described below.

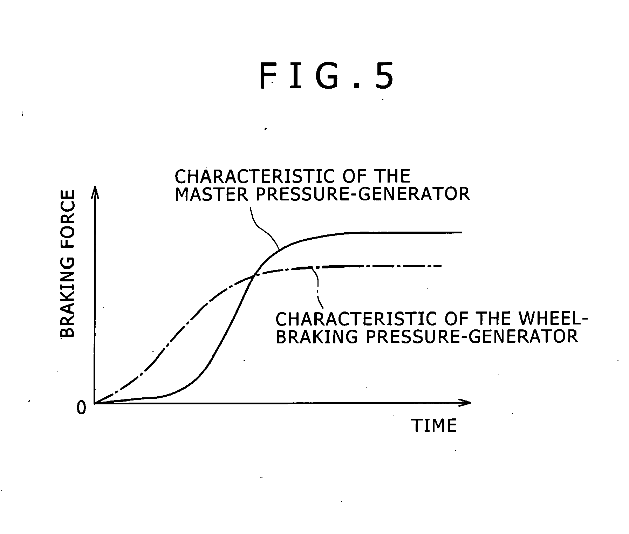

Fig. 5 is a graph showing the variation of braking force with time when drive control signals indicating maximum drive ratios are given to the first actuator and the second actuator.

As can seen in Fig. 5, the first actuator has a low response characteristic and can generate a high braking force, while the second actuator has a high response characteristic and cannot generate a high braking force. Although not shown in Fig. 5, the durability of the first actuator is higher than that of the second actuator.

In step S6, when a response characteristic is set as the desired performance in step S4, the drive ratio of the second actuator is set high so as to drive the second actuator having a high response characteristic preferentially. When a durability is set as the desired performance in step S4, the drive ratio of the first actuator is set high so as to drive the first actuator having a high durability preferentially.

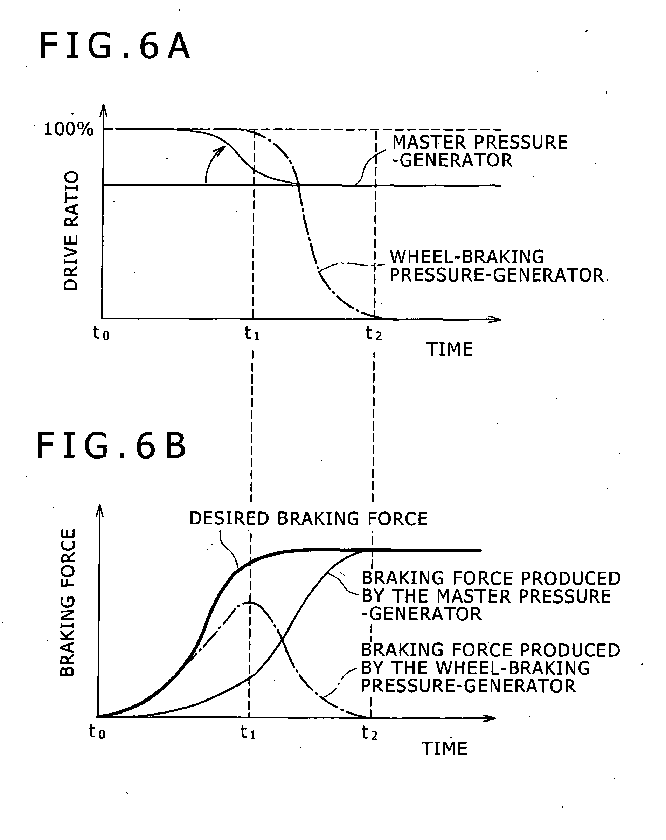

If a high degree of risk is estimated in step S3, the durability is set as the desired performance in step S4, and a desired braking characteristic, in which desired braking force increases comparatively sharply and maximum braking force is comparatively high as indicated by thick line in Fig. 6B, is calculated.

As shown in Figs. 6A and 6B, for example, the drive ratio calculating unit 114 calculates a drive ratio of the first actuator so that a maximum desired braking force can be produced by driving only the first actuator, and sets a drive ratio characteristic of the first actuator so as to maintain the drive ratio.

The drive ratio calculating unit 114 sets a drive ratio characteristic of the second actuator so that the second actuator is driven at a drive ratio nearly equal to a maximum drive ratio in a period between time to and time t₁ in which a certain braking force can be produced by the operation of the first actuator,' and the drive ratio of the second actuator decreases gradually to zero in a period between time t₁ and time t₂ in which a maximum desired braking force can be produced only by the operation of the first actuator.

The drive ratios of the first actuator and the second actuator at various times are calculated so that the sum of a braking force produced by the first actuator driven at the drive ratio and a braking force produced by the second actuator driven at the drive ratio is equal to or infinitely near a desired braking force at the time.

In the brake system of the first embodiment, the second actuator having a high response characteristic is driven preferentially at a high drive ratio in the initial period between times t₀ and t₁ when a high response characteristic is important, and the second actuator having a low durability is driven at a low drive ratio in a period after time t₁ in which a certain braking force can be surely produced by the first actuator. Thus, very high response performance can be realized and durability can be enhanced.

The braking force produced by the brake system is transitional in the period between times t₀ and t₂ and the braking force is lower than the maximum desired braking force that can be exerted eventually. Therefore, change of the degree of risk in each control cycle is small in that period, and hence the desired braking characteristic and the drive ratio characteristics of the first actuator and the second actuator calculated at time to are used at least until time t₂, and drive ratios indicated by the drive ratio characteristics are given to the first actuator and the second actuator in each control cycle.

When the degree of risk is very high and a desired braking characteristic in which a desired braking force increases more sharply than the desired braking characteristic indicated by the thick line in Fig. 6B is calculated, a drive ratio characteristic represented by a thin line indicated by the arrow in Fig. 6A is calculated for the first actuator so that the drive ratio increases to a maximum drive ratio in the initial period.

The master pressure-generator 200 as the first actuator has a first pressing device for applying pressure proportional to the position of the brake pedal 16 to the hydraulic fluid, and a second pressing device including the motor-driven pressing mechanism 220. Therefore, a drive ratio of the second pressing device is a value obtained by subtracting the present drive ratio of the first pressing device from a drive ratio provided by the brake controller 100.

More specifically, upon receiving a drive ratio M for the master-pressure generator 200 from the brake controller 100, the master-pressure controller 201 of the master-pressure generator 200 calculates a drive ratio M1 for the master-pressure generator 200 using only the first pressing device from an output signal provided by the desired braking force sensor 31, and calculates a drive ratio M2 for the master-pressure generator 200 using only the second pressing device by subtracting the drive ratio M1 from the drive ratio M. The drive ratio M2 is converted into a drive ratio m2 for the motor-driven pressing mechanism 220 and the drive ratio m2 is given to the motor-driven pressing mechanism 220. In the first embodiment, the brake controller 100 provides the drive ratio M for the master-pressure generator 200 to master-pressure controller 201. Since the brake controller 100 also receives the output signal of the braking force sensor 31, the brake controller 100 may calculate the drive ratio m2 for the motor-driven pressing mechanism 220 of the master-pressure generator 200 and may give the drive ratio m2 to the master-pressure controller 201.

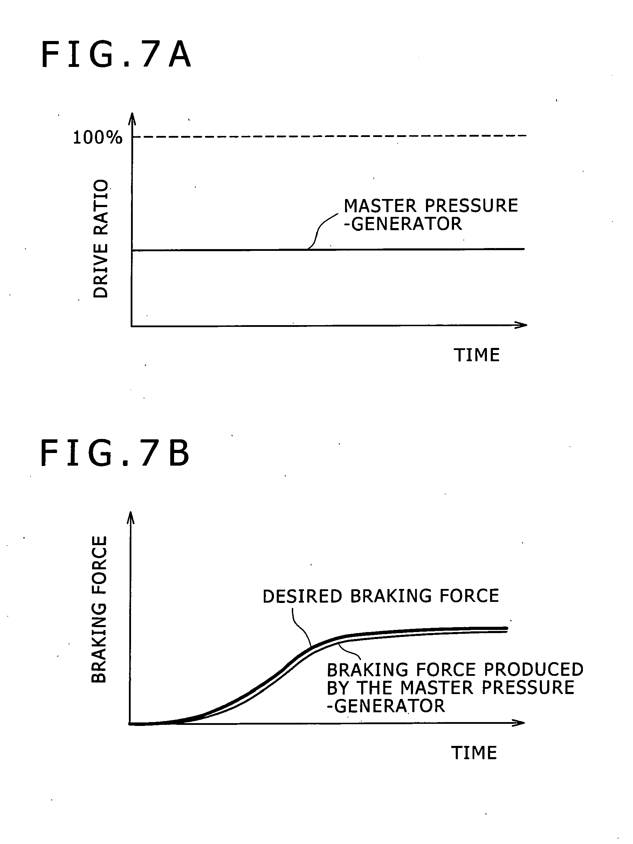

For example, if a low degree of risk is estimated in step S3 and a durability is set as the desired performance in step S4 in an automatic cruising mode, and if a desired braking characteristic in which the desired braking force increases gradually and a maximum desired braking force is low, as indicated by a thick line in Fig. 7B.

As shown in Fig. 7A, the drive ratio calculating unit 114 calculates a drive ratio of the first actuator for acquiring a maximum braking force by the operation of only the first actuator, and sets a drive ratio characteristic of the first actuator so as to maintain this drive ratio. The drive ratio calculating unit 114 also sets a drive ratio characteristic of the second actuator so as to maintain the drive ratio of the second actuator at zero.

Thus, the brake system of the first embodiment can realize a braking characteristic substantially conforming to a desired braking characteristic by using only the durable first actuator, which improves the durability of the brake system.

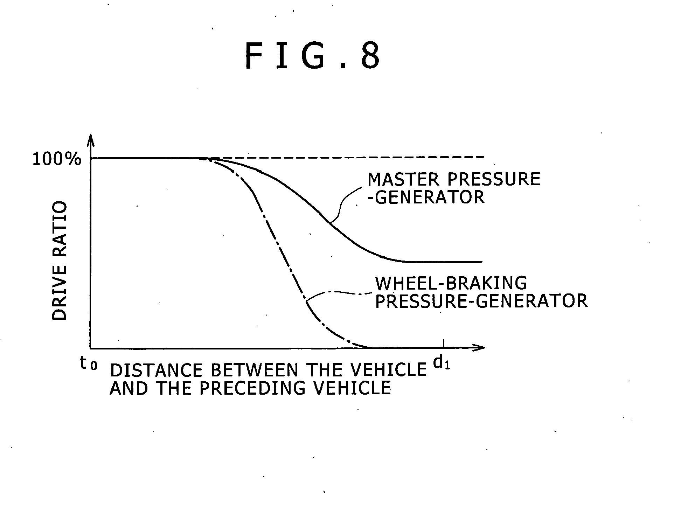

The braking characteristic shown in Figs. 7A and 7B by way of example is for an automatic cruising mode and for a condition in which an object such as a preceding vehicle is at a comparatively long distance d₁ from the vehicle 10 as shown in Fig. 8. In an automatic cruising mode, the drive ratios of the first actuator and the second actuator are increased gradually as the distance between the vehicle 10 and the object decreases.

If a signal is given in the present control cycle to the effect that one of the first actuator and the second actuator is defective, a drive ratio characteristic is calculated in step S6 so that only the other one of the first actuator and the second actuator can achieve a desired braking characteristic as satisfactorily as possible. Thus, the brake system of the first embodiment can exhibit a desired braking characteristic even if one of the first actuator and the second actuator becomes defective.

### Second Embodiment

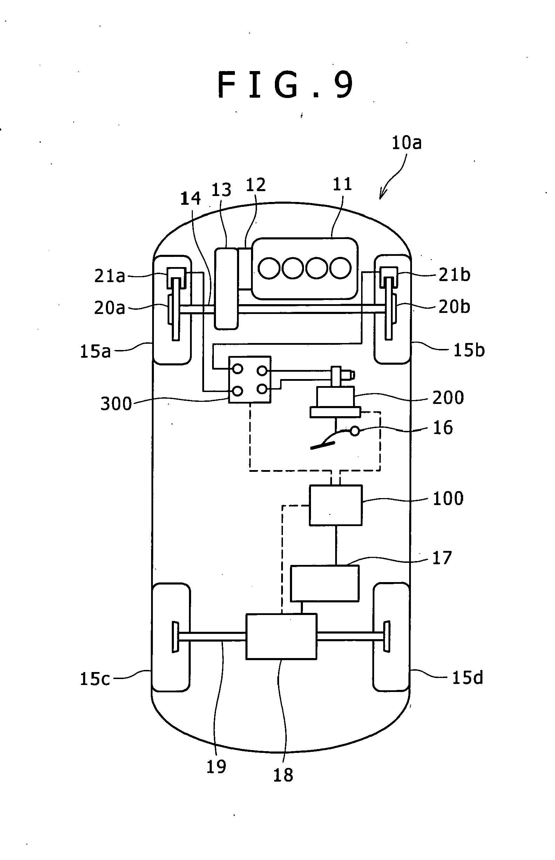

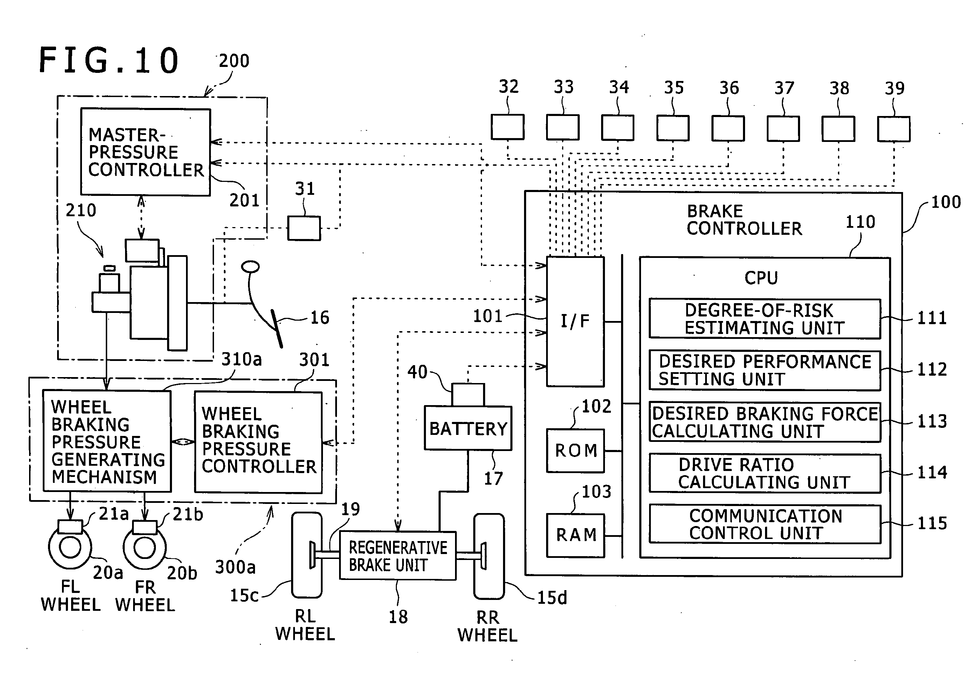

A vehicle 10a in a second embodiment is described below with reference to Figs. 9 to 12.

Referring to Fig. 9, the vehicle 10a in the second embodiment is equipped, similarly to the vehicle 10 in the first embodiment, with an engine 11, a torque converter 12, a transmission 13, drive shafts 14, wheels 15a, 15b, 15c and 15d, a brake pedal 16, disk rotors 20a and 20b, brake calipers 21a and 21b, a brake controller 100, a master-pressure generator 200, namely, a first actuator, capable of generating hydraulic pressure for operating the brake calipers 21a and 21b, a wheel-braking-pressure generator 300a, namely, a second actuator, capable of generating hydraulic pressure for operating the brake calipers 21a and 21b, and a battery 17. The vehicle 10a in the second embodiment is provided with a regenerative braking unit 18, namely, a third actuator, for adding a braking force to the rear wheels 15c and 15d.

Although the rear wheels 15c and 15d are braked by the regenerative braking unit 18 and hence the rear wheels 15a and 15d are not provided with brake calipers, the rear wheels 15c and 15d may be provided with brake calipers.

The master-pressure generator 200 and the wheel-braking -pressure generator 300a of the second embodiment are basically the same as the master-pressure generator 200 and the wheel-braking -pressure generator 300 of the first embodiment. Since the rear wheels 15c and 15d are not provided with brake calipers, a wheel-braking-pressure generating mechanism 310a included in the wheel-braking-pressure generator 300a does not supply a hydraulic fluid to the rear wheels 15c and 15d. Whereas the wheel-braking-pressure generating mechanism 310 of the first embodiment supplies the hydraulic fluid through each of the two brake systems to the two brake calipers, the wheel-braking-pressure generating mechanism 310a of the second embodiment supplies the hydraulic fluid through each of two brake systems to the one brake caliper.

The regenerative braking unit 18 connected to rear axles 19 respectively connected to the left rear wheel 15c and the right rear wheel 15d. The regenerative braking unit 18 generates power when the regenerative brake unit 18 applies a braking force to the rear axles 19 and charges the battery 17 by the generated power. Thus, the regenerative braking unit 18 has both the functions of a brake and an actuator.

The battery 17 is provided with a voltmeter 40 for measuring the terminal voltage of the battery 17. The voltmeter 40 and other sensors are connected to an interface 101 included in the brake controller 100.

The operation of the brake controller 100 of the second embodiment is described below.

The brake controller 100 of the second embodiment executes a loop of step S2 to step S7 of the flow chart shown in Fig. 4 at predetermined intervals.

In step S2, a communication control unit 115 included in the brake controller 100 receives a voltage signal from the voltmeter 40 and receives information about the condition of the regenerative braking unit 18 in addition to the information about the environment of the vehicle 10a the same as that mentioned in the description of the first embodiment.

In step S4, a performance setting unit 112 sets improvement of durability of the brake system and power saving as desired performance if the degree of risk estimated in step S3 is below a predetermined threshold and a voltage indicated by the voltmeter 40 is below a predetermined voltage.

When the amount of electricity stored in the battery 17 drops below a predetermined charge threshold, the terminal voltage of the battery 17 drops below a predetermined voltage threshold. In the second embodiment, the terminal voltage of the battery 17 is measured instead of the amount of electricity stored in the battery 17. When the terminal voltage is below a predetermined voltage, it is assumed that the amount of stored electricity has dropped below a predetermined amount of electricity and power saving is set as the desired performance. The second embodiment may employ some other method for estimating the amount of stored electricity.

A drive ratio calculating unit 114 calculates a drive ratio for the regenerative brake unit 18 as the third actuator in addition to drive ratios for the first actuator and the second actuator.

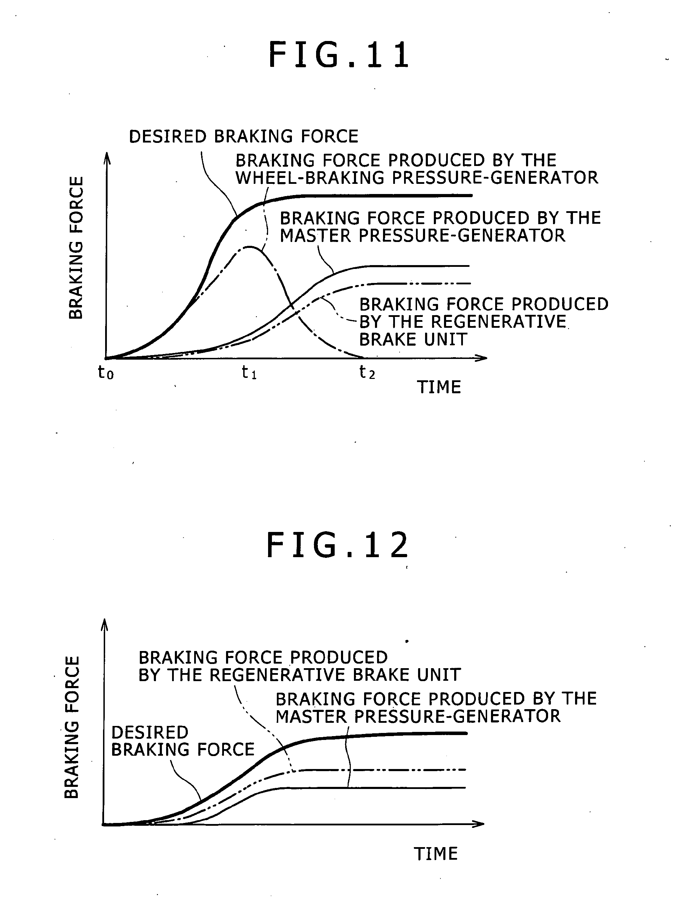

If the degree of risk estimated in step S3 is higher than the threshold, response characteristic is set as the desired performance in step S4, desired braking force increases comparatively sharply and a maximum desired braking force is comparatively high as shown in Fig. 11, and a desired braking characteristic the same as that indicated by a thick line in Fig. 6B is set.

Then, in step S6, the drive ratio calculating unit 114 sets a drive ratio characteristic of the second actuator the same as that shown in Fig. 6A and a braking characteristic of the second actuator the same as that shown in Fig. 6B (indicated by a chain line shown in Fig. 11).The drive ratio calculating unit 114 sets drive ratio characteristics of the first actuator and the third actuator such that a braking force produced by the first actuator shown in Fig. 6B is shared by the first actuator and the third actuator. That is, the drive ratio characteristics of the first actuator and the third actuator are set so that the sum of a braking force produced by the first actuator and a braking force produced by the third actuator is equal to a maximum desired braking force at time t₂ when the drive ratio of the second actuator is 0. In this braking mode, it is preferable that the amount of power consumed by the first actuator and the second actuator is substantially equal to that generated by the third actuator.

If a low degree of risk is set in step S3, durability and power saving are set as the desired performance in step S4, desired braking force increases gradually to a low maximum desired braking force as shown in Fig. 12, and a desired braking characteristic the same as the desired braking characteristic indicated by a thick line in Fig. 7B is set in an automatic cruising mode.

Then, the drive ratio calculating unit 114 sets the drive ratio characteristics of the first actuator and the third actuator so that the drive ratio of the second actuator is zero and the sum of a braking force produced by the first actuator and a braking force produced by the third actuator is equal to a maximum desired braking force. In this case, it is preferable that the amount of power generated by the third actuator is larger than that consumed by the first actuator. If the drive ratio of the third actuator is increased excessively to increase the amount of power generated by the third actuator, the front wheels 15a and 15b, and the rear wheels 15c and 15d are braked differently. The drive ratio of the third actuator is increased within a drive ratio range that will not cause unbalanced braking.

The brake system of the second embodiment has an improved response characteristic and durability, and can achieve power saving.

### Modifications

Modifications of the foregoing embodiments are described below.

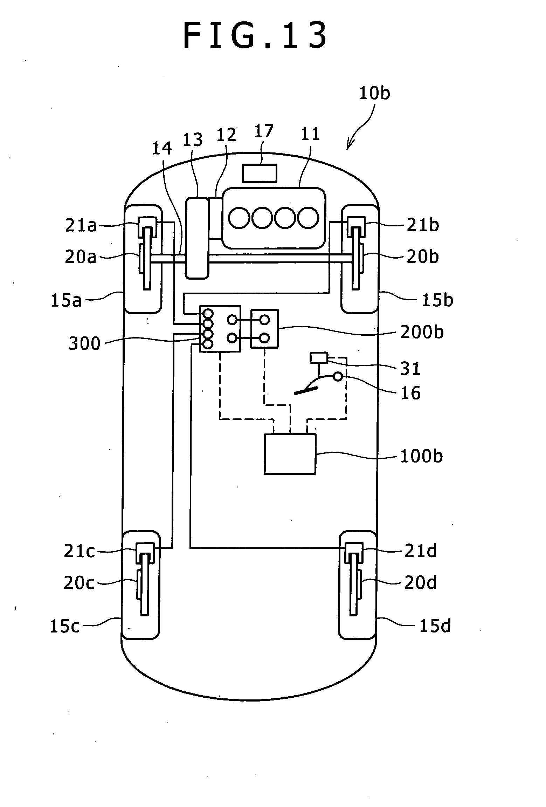

In each of the foregoing embodiments, the pressure applied to the brake pedal 16 is transmitted mechanically to the master-pressure generator 200. The pressure applied to the brake pedal 16 may be transmitted electrically to a master-pressure generator 200b as shown in Fig. 13. A brake controller 100b generates a drive signal indicating a driving operation corresponding to the pressure applied to the brake pedal 16 on the basis of the output signal of the braking force sensor 31 and provides the drive signal to the master-pressure generator 200b. The present invention does not place any restrictions on means for transmitting the pressure applied to the brake pedal 16 to the master -pressure generator 200.

In the foregoing embodiments, the brake calipers are of a hydraulic type. The present invention does not place any restrictions on the type of the brake calipers; the brake calipers may be electrically operated brake calipers. The present invention is not limited in its practical application to the disk brakes and the regenerative brakes and is applicable also to, for example, drum brakes.

Although the vehicles in the foregoing embodiments are provided with the two or the three actuators, the present invention is applicable to vehicles provided with four or more actuators.

We note that the first actuator, the second actuator, and the third actuator are described herein as the master-pressure generator, the wheel-braking-pressure generator, and the regenerative brake unit, respectively, they need not be constructed in this manner. Any devices may be applied to any of the first, the second, and the third actuators. Furthermore, the vehicles may be provided with actuators having the same performance, namely,' actuators of the same type. For example, both the first and the second actuator may be master-pressure generators. When such actuators are employed, the life of each of the actuators can be extended by changing drive ratios for the actuators under a predetermined condition.
Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A brake controller (100) for controlling a plurality of actuators (200, 300) for driving braking members of a plurality of brakes, said brake controller (100) comprising:
a performance setting unit (112) for setting desired performance required of the brakes;
a braking force calculating unit (113) for calculating a desired braking force to be produced by each brake;
a drive ratio calculating unit (114) for calculating drive ratios at which the actuators (200, 300) operate to achieve the desired performance and to make the plurality of brakes produce a braking force equal to or nearly equal to the desired braking force; and
a drive signal output unit for providing the actuators (200, 300) drive signals corresponding to the drive ratios for the actuators (200, 300).

2. The brake controller according to claim 1 further comprising:
a detecting unit for detecting an environment information about
a surrounding environment to a vehicle containing the brake controller (100);
a degree-of-risk estimating unit (111) for estimating a degree of risk based on the environment information, wherein the performance setting unit (112) sets the desired performance based on the degree of risk, and the braking force calculating unit (113) calculates the desired braking force based on the degree-of-risk.

3. The brake controller according to claim 2, wherein the drive ratio calculating unit (114) calculates maximum drive ratios for the plurality of actuators (200, 300) when the degree of risk is not lower than a predetermined degree of risk.

4. The brake controller according to at least one of claims 1-3, wherein at least one of the plurality of actuators (200, 300) has an operation different from those of the rest of the actuators (200, 300), and the drive ratio calculating unit (114) calculates drive ratios for each of the plurality of actuators (200, 300) so that the desired performance may be achieved.

5. The brake controller according to claim 2, wherein the detecting unit further detects a driver information about an operation made by a driver driving the vehicle (10), and the performance setting unit (112) sets the desired performance based also on the driver information.

6. The brake controller according to claim 2, wherein the performance setting unit (112) sets the desired performance based also on the environment information.

7. The brake controller according to claim 2, wherein the degree-of-risk estimating unit (111) further estimates a type of risk, and the braking force calculating unit (113) calculates the desired braking force based on the type of risk.

8. The brake controller according to at least one of claims 1-7, wherein the braking force calculating unit (113) calculates a desired braking characteristic indicating variation of the desired braking force over time, the drive ratio calculating unit (114) calculates drive ratio characteristics indicating variations of drive ratios respectively for the actuators (200, 300) over time, and the drive signal output unit gives the actuators (200, 300) the drive control signals respectively corresponding to the drive ratios respectively for the actuators (200, 300) at the present time indicated by the respective drive ratio characteristics of the actuators (200, 300).

9. The brake controller according to at least one of claims 1-8, wherein, even if one of the plurality of actuators (200, 300) becomes defective, the rest of the actuators (200, 300) can operate normally to produce the braking force.

10. The brake controller according to at least one of claims 1-9, wherein each of the plurality of actuators (200, 300) has a defective condition reporting unit for reporting a condition of the actuator (200, 300) to the brake controller (100), and the drive ratio calculating unit (114), when the drive ratio calculating unit (114) receives the defective condition of any of the actuators (200, 300) from the defective condition reporting unit, calculates the drive ratios respectively for the actuators (200, 300) excluding any actuator (200, 300) having a defective condition so that operations of the actuators (200, 300) excluding the defective actuator can compensate for a lost operation of the defective actuator.

11. The brake controller according to at least one of claims 1-10, wherein the plurality of actuators (200, 300) include a regenerative brake unit for generating electric power to produce a braking force, wherein the drive ratio calculating (114) unit calculates the drive ratios respectively for the actuators (200, 300) excluding the regenerative brake unit such that an amount of electric power consumed by operations of the actuators (200, 300) excluding the regenerative brake unit is smaller than that of electric power generated by the regenerative brake unit.

12. The brake controller according to at least one of claims 1-11, further comprising an electric charge measuring unit for measuring an amount of electric charge stored in a battery (17) on board a vehicle (10), wherein the performance setting unit (112) sets power saving as desired performance when the amount of electric charge is below a predetermined amount of electric charge, and the drive ratio calculating unit (114) calculates the drive ratios respectively for the actuators (200, 300) such that an amount of electric power generated by the regenerative brake unit is larger than the amount of power consumed by operations of the actuators (200, 300) excluding the regenerative brake when the desired performance is power saving.

13. A brake system comprising:
the brake controller (100) according to claim 1;
the brakes; and
the plurality of actuators (200, 300).

14. A vehicle provided with the brake system according to claim 13.
